# EUROPEAN PATENT APPLICATION

(11) **EP 1 852 768 A2**
(43) Date of publication of application: **07.11.2007**
(21) Application number: 07386009.0
(22) Date of filing: 04.05.2007
(51) Int. Cl.: G06F 3/00

(54) **Interactive virtual desk**

(30) Priority: 04.05.2006 GR 20060100261
(71) Applicant: Katsantonis, Evagelos, 15231 Halandri, Attiki (GR); Voulgari, Elpis, 15231 Halandri, Attiki (GR)
(72) Inventor: Katsantonis, Evagelos, 15231 Halandri, Attiki (GR); Voulgari, Elpis, 15231 Halandri, Attiki (GR)

(57) **Abstract**

The present invention refers to a system that through vertical digital projection (9) (10) and the use of wireless interactive input devices (7) converts a simple surface - i.e. a table - (1) into a virtual work and collaboration desktop. This system - which can be used by multiple users simultaneously (figure 3) - offers the ability to execute any function a computer supports and offers new specialized possibilities for viewing, organizing, editing and storing digital files (mainly images, drawings, videos and multimedia files).

The system is a manageable and effective tool for team work and corporate presentations as it provides the opportunity to multiple users to easily and intuitively manage computer data simultaneously. One of the basic characteristics of the system is that it supports the dynamic rearrangement, rotation and moving of projected data so that all users may have access to all data irrespectively of their position.

## Description

### TECHNICAL FIELD

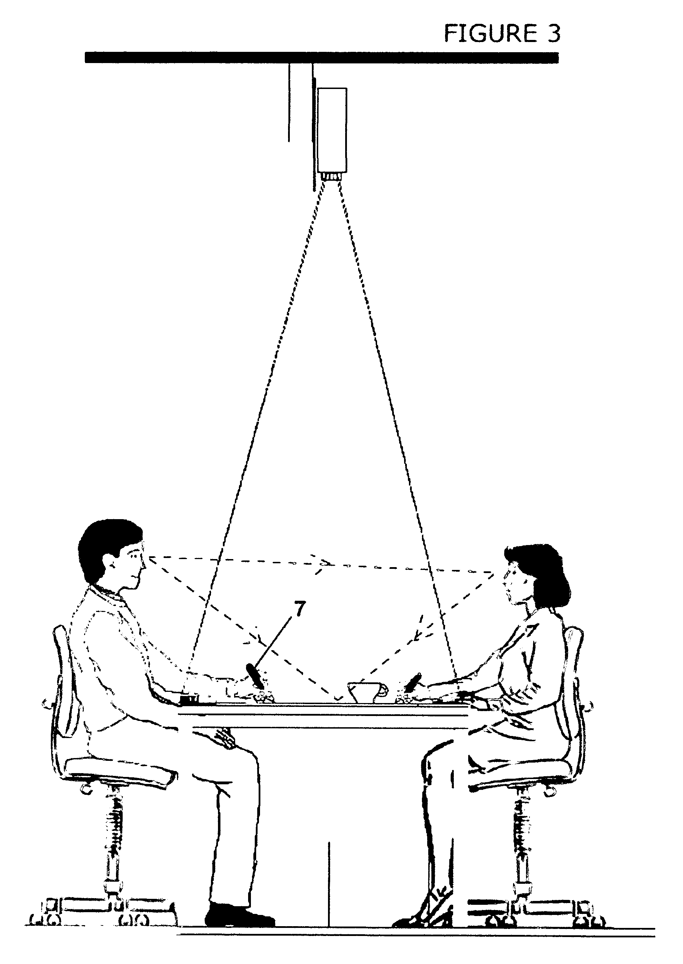

The present invention refers to a system that through vertical digital projection (9) (10) and the use of wireless interactive input devices (7) transforms a simple surface - i.e. a table - (1) into a virtual work and collaboration desktop. This system - which can be used by multiple users simultaneously (figure 3) - provides the ability to execute any function a computer supports and offers new specialized possibilities for viewing, organizing, processing and storing digital files (mainly images, drawings, videos and multimedia files).

### PREVIOUS TECHNIQUE LEVEL

Today, various digital projection systems aiming to facilitate individual or team work using computers are being used. A standard desktop screen does not always cover the needs for interaction with the computer, mainly because of its size - which renders simultaneous monitoring by multiple users difficult - but also because of the lack of direct interaction. Mainly for these reasons, efforts are being made lately to exceed the narrow limits of the "computer - screen - mouse - keyboard" system, and to research new interaction methods both with the computer and the other users. The projection systems existing today differentiate on three basic characteristics: the projection method, the projection surface and the interaction method:
Projection Method
   ■ Vertical projection (front or rear) using a video-projector
   ■ Horizontal projection (front or rear) using a video-projector
   ■ Vertical or horizontal projection with plasma, TFT, LCD and other screens
Projection Surface
   ■ Glass, Plexiglas, polyester, cloth, wall some of which allow for both front and rear projection.
Interaction Method
   ■ Interaction surfaces (i.e. independent, removable touch screens, interactive boards (white boards), interactive projection screens)
   ■ Two-dimensional or three-dimensional mouse and joysticks (wireless or not). Interactive magnetic pens, light pens, graphics tablets.
   ■ Hand gesture recognition cameras that transfer spatial data to the computer.
   ■ Interactive tools and computer data management, projection, and storage systems.

It is clear that using the aforementioned methods, various systems and installations may be created tailored to specific needs. However, there are still many unresolved issues and as a result the market is lacking a complete, effective and cost-efficient solution that will cover all interaction and communication needs. Listed hereafter are the disadvantages of the existing solutions:
Projection Method
   ■ Horizontal projection installations on a vertical surface are not suitable for team work and interaction among multiple users, as it is uncomfortable for them to stand and they do not have space for their personal items (notepads, telephones, coffee, etc.).
   ■ In the case of horizontal front projection, the users cannot be near the screen as the shadows hide the projected data.
   ■ When horizontal projection installations are used, the user must turn his back to the audience in order to face the projected data.
   ■ In the case of horizontal rear projections, a large space behind the screen is required to fix the video-projector, something which is not always feasible due to lack of space. In case the room is not large enough, there is also the option to use mirrors that diminish the distance of projector - screen. This solution however requires specialized installation by technicians, has high cost and difficult maintenance.
   ■ For vertical rear projection installations on horizontal surfaces, such as interactive desks, the video-projector is positioned below the table inside a special cabinet. This cabinet occupies a lot of space and as a consequence, prevents the users to seat properly and place their feet under the table. The users must therefore stand.
   ■ Rear projection interactive desks because of their special construction and their sensitive projection surface, cannot be adjusted to cover other simpler needs of a desk; they cannot be used for example as standard desks or conference tables.
Projection Surface
   ■ Projection screens that include interactive touch surfaces (i.e. touch screens or plasma/TFT screens with removable touch surfaces etc.) have limited size and cannot therefore support large group interaction.
   ■ The above-mentioned projection surfaces are costly and intended only for this use, i.e. they cannot be used for any other purpose.
   ■ Standard projection surfaces are usually sensitive to temperature changes, touching and cleaning.
   ■ The projection surfaces that are being used for horizontal projections cannot easily carry heavy weights such as books or other objects that may exist on a desk.
   ■ The use of a touch screen as a projection surface for horizontal installations has the disadvantage of increased reflectivity of the video-projector's light beam. Interaction Method
   ■ Standard 3D pens, 3D mice and light pens do not support the simultaneous interaction of multiple users.
   ■ Hand gesture recognition systems with cameras have limited accuracy and high cost.
   ■ In addition, in many cases the users cannot reach all data from all locations.
   ■ All digital data management, projection and storage systems have been designed to be operated by a single user. These systems are also built to operate on a computer screen and cannot therefore cover the special needs that the horizontal large-scale projection has. Specifically,
      o There is no system that resolves the issue of data orientation to all directions.
      o There is no system that resolves the issue of distance between the users and the projected data and as a result the users cannot have access to these data.
      o There is no system that supports the dynamic "distribution" of digital objects (i.e. images) with the purpose of team communication and collaboration during a meeting.
   ■ There is no method allowing for easy and rapid collection, organization and presentation of data during a professional meeting. The existing methods require that the user devotes enough time prior to the professional meeting to prepare a presentation. In addition, it is difficult and time-consuming to further modify these presentations if this is required afterwards.

### BRIEF DESCRIPTION

The present invention refers to a system that through vertical digital projection (9) (10) and the use of wireless interactive input devices (7) transforms a simple surface - i.e. a table - (1) into a virtual work and collaboration desktop. We will refer to this surface for facilitation purposes as "virtual desktop". This system - which can be used by multiple users (figure 3) simultaneously - offers the ability to execute any function a computer supports and offers new specialized possibilities for viewing, organizing, processing and storing digital files (mainly images, drawings, videos and multimedia files). The system is comprised by:
■ A table or some other horizontal or inclined surface (1) made of a material which demonstrates certain qualities (it is white, smooth, produces no reflections and is resistant to scratches). If an existing table does not possess the required qualities, a temporary independent material (2) may be attached to it, having the same or smaller size (width - length) and meeting the above requirements. This material may be a white cardboard, a foam board, a milky white matt Plexiglas, a white matt silicon coat, PVC, a polycarbonate surface, etc.
■ Any type of chairs (number of chairs depending on the table's size).
■ One or more video-projectors (3).
■ A ceiling-suspended base (4) for each video-projector which can be turned downwards.
■ A computer (6) and peripheral devices.
■ One or more wireless interactive pens (7) for direct interaction with the projected data and a coordinates' receiver (8) or other interactive tools.
■ Methods for interaction with the computer's data.

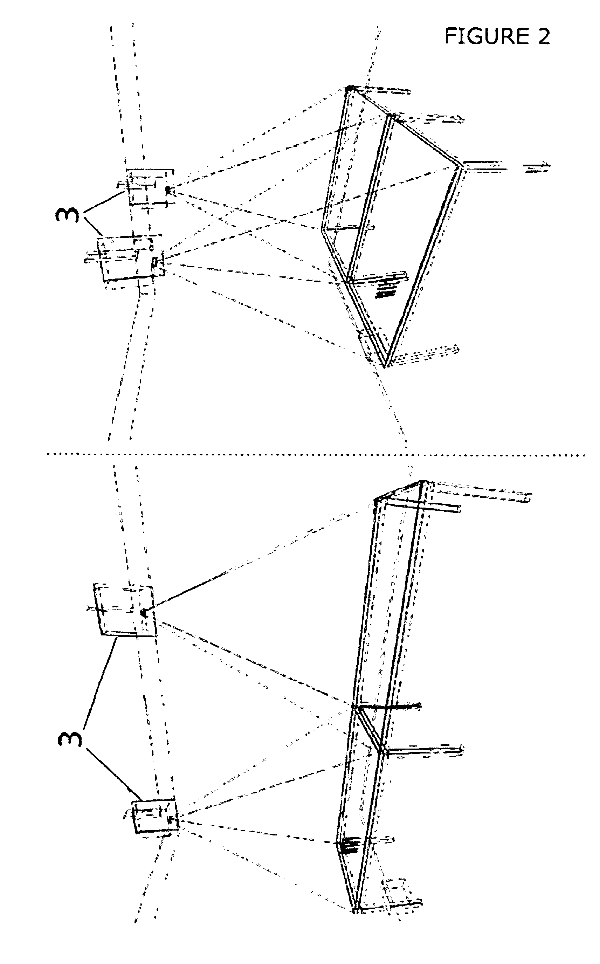

The system is a manageable and effective tool for team work and corporate presentations as it provides the opportunity to multiple users to easily and intuitively manage computer data simultaneously. One of the basic characteristics of the system is that it supports the dynamic rearrangement, rotation and moving of projected data so that all users may have access to all data irrespectively of their position.
Listed hereafter are the advantages of the present invention as apposed to existing solutions:
Projection Method
   ■ The system supports simultaneous use by multiple users who may be seated around the table and put on it their notepads or other useful items (figure 3).
   ■ The system installation is such that the shadows of the users do not block the video-projector's light beam. In case one or more users interact with their hands positioned on the projection surface, their shadow does not block the data as the hands touch the projection surface (figure 3).
   ■ The system does not require the use of mirrors or other specialized media for the projection on the horizontal or inclined surface, but only to simply fix a video-projector (3) on the ceiling (5). The space that the system occupies is small as it corresponds to the minimum space required by the table anyway. The system's installation is extremely simple and does not require special maintenance.
   ■ In case a larger projection surface is required, there is a possibility to install aligned multiple video-projectors in order to produce a much larger image (figure 2).
   ■ The projection on the horizontal or inclined surface that the system uses, allows all users to watch the presentation, actively participate and at the same time maintain eye-contact (figure 3).
   ■ As front projection is implemented (from the ceiling), the space under the table is empty and all users may seat comfortably as they work (figure 3).
   ■ If a work table (desk or meeting table) has certain basic specifications (white, smooth, non-reflective surface), it can easily be used as a projection surface. So, when the system is not used, the table can cover the office's daily needs.
Projection Surface
   ■ Since the projection surface is the upper part of a desk, dimensions and proportions may be adjusted to meet specific needs.
   ■ Since the projection surface is the upper part of a desk, the cost remains low. Also, this surface may be used for any standard work tasks.
   ■ Since the projection surface is the upper part of a desk, it is resistant to temperature changes, touching and cleaning.
   ■ Since the projection surface is the upper part of a desk, it can carry weights.
   ■ The use of a standard, commercially available desk (with white surface) is ideal for projection since its specifications make it anyway non-reflective.
Interaction Method
   ■ The system's interactive pens (7) may be used simultaneously by multiple users, thus facilitating collaboration and team work (figure 3).
   ■ Interactive pens are user-friendly since they resemble standard pens.
   ■ The coordinates' receiver (8) is limited in size and can be easily fitted to the desk's corner.
   ■ The creation and preparation of a presentation may be done on-site and within a small time-frame.
   ■ The system provides the ability to rearrange and rotate (14) (29) (30) all data so that they can be dynamically oriented to any direction according to the position of the user concerned.
   ■ The system supports the moving and gathering (15) (26) (27) (28) of data in a way that they are accessible by any user and from any table side.
   ■ The system supports the dynamic resizing of data (decrease - increase size) (13).
   ■ The system supports the dynamic moving of data from one user to the other (15) (acceleration - deceleration according to the interactive pen's movement speed).
   ■ The system possesses a projection border recognition mechanism and therefore data placed outside the projection borders are repositioned (15).

### BRIEF DESCRIPTION OF THE DRAWINGS

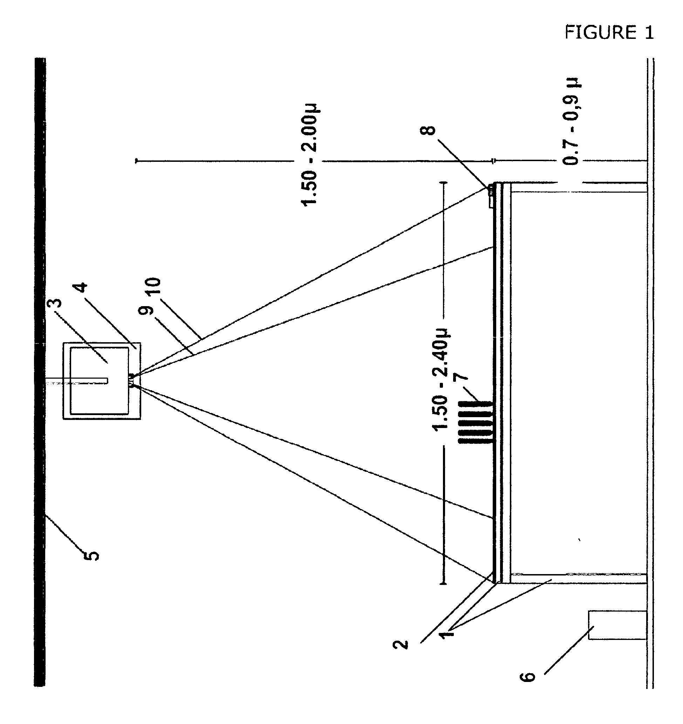

Figure 1 displays the installation of a system comprised by a single video-projector. The system consists of a table (1) with a white, smooth, matt, non-reflective surface, temporary independent material (2) fitted on the table, a video-projector (3) which projects vertically, fixed on a stable base (4) attached to the ceiling (5), a computer (6), a series of interactive pens (7) and a coordinates' receiver (8) placed at the corner of the table. In this figure you can see the light beam which can cover part of the horizontal surface (9) or the entire surface (10).
Figure 2 displays two alternative system installations comprised by two video-projectors (3), installed in a way that their projection borders overlap and create a large, unified projection.
In figure 3 the position of the users around the table and the simultaneous interaction with the pens (7) may be observed. One of the basic advantages of the system is that all users may watch the presentation, participate actively and at the same time have eye-contact.

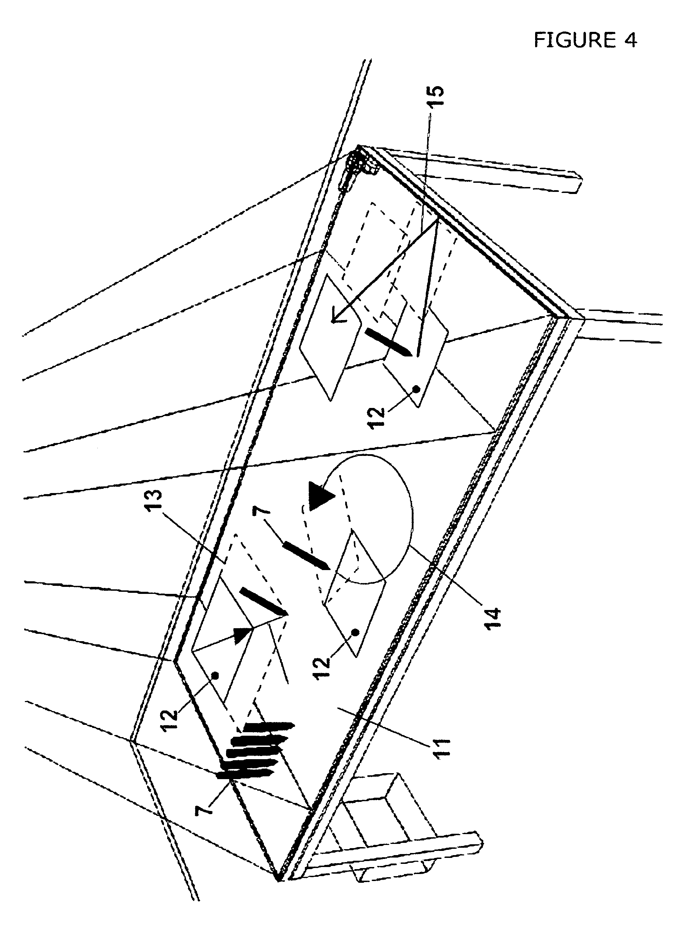

Figure 4 displays some of the basic methods the system provides. There are certain selected files (12) on the "virtual desktop" (11). You will see the dynamic file resizing method (13), which is executed by tapping the interactive pen (7) on a designated area-button, located on them, and by dragging them left (decrease size) or right (increase size). You will also see the dynamic file rotation method (14), which is executed by tapping the interactive pen on a designated area-button. located on them. Finally, you may observe the dynamic moving of the files from one point to another and their automatic bouncing back (5) when they reach one of the table's borders. All the above changes to the file status are executed gradually, passing through all intermediate dimensions, angles and positions.

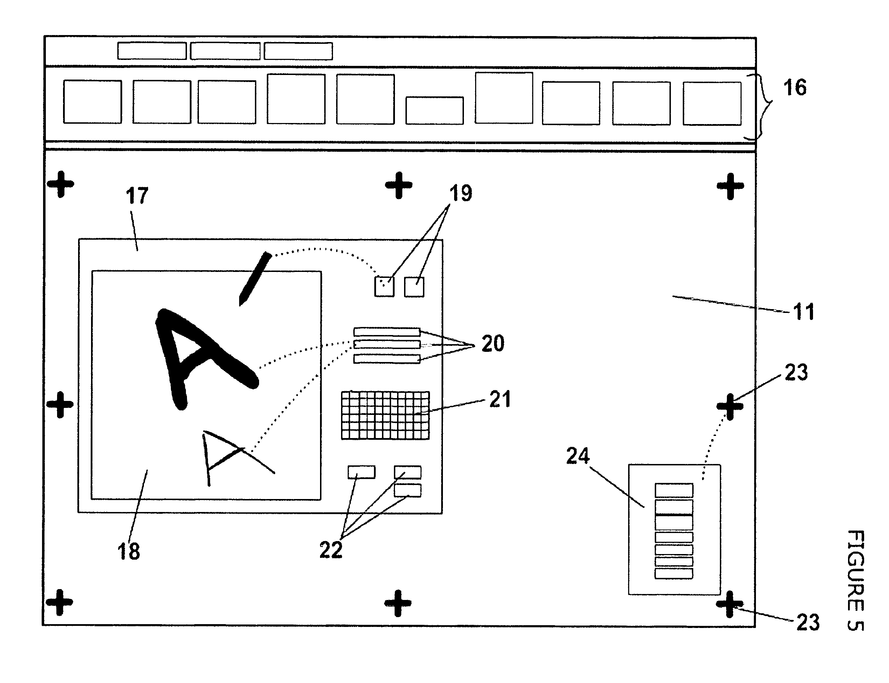

Figure 5 displays the positioning of the selected folder's contents in a designated area and in horizontal arrangement (16). An interactive drawing panel (17) is also presented, which includes a designated white area (18) on which users may write or draw, buttons for selecting pen and eraser (19), tools for the type and width of the pen's trace (20), tools for the selection of the colour of the pen's trace (21), tools for the retrieval of previous commands as well as the storing of drawings (22). You may also see the symbols (23) that are dispersed in various areas of the "virtual desktop" (11) and aim to provide access to all the system's control panels from every side of the table. Specifically, tapping any one of these symbols with the interactive pen, a selection menu (24) appears on that specific area which provides access to all the system's control panels.

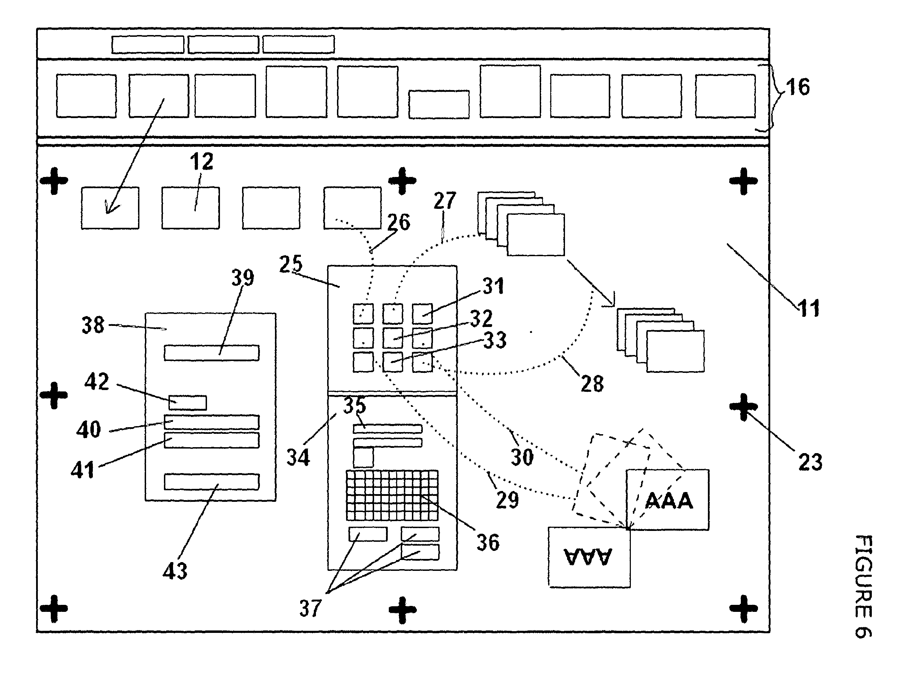

Figure 6 displays the positioning of the selected folder's contents in a designated zone and in horizontal orientation (16) as well as a series of selected files (12) aligned in the central area of the "virtual desktop" (11). You will see the main interactive control panel (25), through which users may recover the original size and position (26) of all the selected files simultaneously, gather all selected files in horizontal arrangement so that each file covers part of its adjacent file to save space (27), move groups of selected files to any area of the "virtual desktop" by simply clicking on the desired area (28), simultaneously rotate all the files to various directions (29), activate the automatic rotation of files (30), simultaneously close all selected files (31), rearrange the order of selected files (32), activate (33) an image editing control panel (34) which converts the interactive pen into a multi-task drawing tool. On the image editing control panel (34), there are tools for the type and width of the pen's trace (34), tools for the selection of the pen's trace colour (36), tools for the retrieval of former commands as well as for the storage of the edited file (37). Finally, figure 6 presents the interactive control panel (38) which manages the creation, storage and display of file groups. This panel includes tools for saving selected files as a group (39), loading stored groups (40), selecting from a list that includes all loaded groups (41), adding of notes and description on every file (42) (49) (50), and activating an automatic presentation of selected files as a slideshow (43).

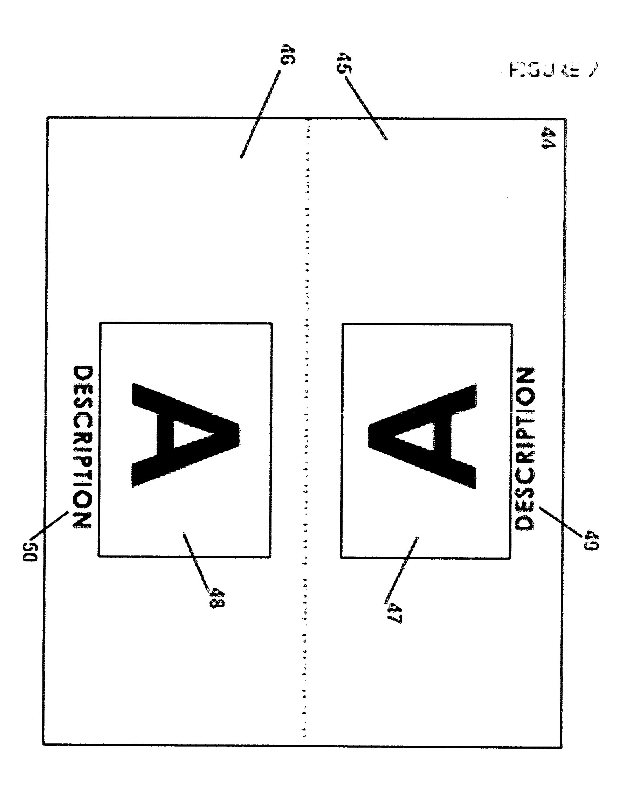

Figure 7 displays the double slideshow (44) method. During the double slideshow, the "virtual desktop" (11) is split into two identical but reversibly oriented areas (45) (46) (like a mirror), which project the same image so that all parties may watch the presentation. Projected files (47) (48) and their descriptions (49) (50) are also presented.

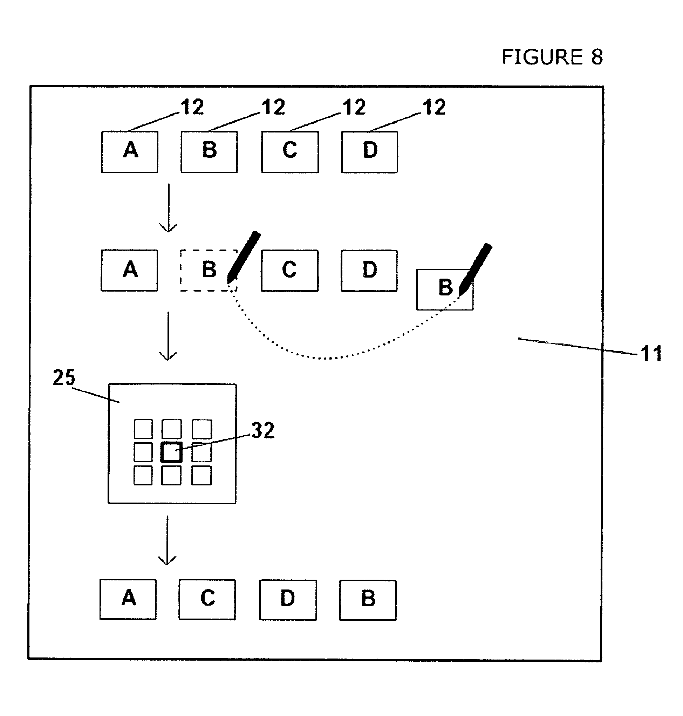

Figure 8 displays the dynamic rearrangement of the order by which selected files are displayed, which is executed by dragging and dropping files in the desired order and then clicking (32) a button on the control panel (25) which stores the altered order.

### DETAILED DESCRIPTION

The present invention is a system and a method for projecting and manipulating computer data (6) (mainly images, drawings, multimedia files and videos) on a horizontal or inclined projection surface (i.e. a desk) (1) (2) which allows the simultaneous interaction of multiple users with special interactive pens (7) or other interaction tools. Specifically, this invention transforms a standard work desk into a virtual collaboration, projection and communication desktop. The system is comprised of:

### A) A table or any other horizontal or inclined work desktop

The work desktop may be a table, a desk or any other horizontal or inclined surface (1) with the following specifications:
■ White colour
■ Smooth surface
■ Non-reflective - matt surface
■ Damage-resistant surface (durability to the use of interactive pens)

If the projection surface does not possess the required qualities, a temporary independent material (2) may be fitted on it, having the same or smaller size (width - length) and meeting the above requirements. This material may be a white cardboard, a foam board, a milky white matt Plexiglas, a white matt silicon coat, PVC, polycarbonate surface, etc. Note that this additional material is temporary and therefore does not change permanently the existing surface.

### B) Any type of chairs

Any type of chairs may be placed around the table (1). Their number depends on the table's size.

### C) One or more video-projectors

The video-projectors (3) are standard, commercially available video-projectors that vary according to specific needs. The video-projectors may use LCD or DLP technology. For this system it is preferable to use DLP for its high-definition (truss effect reduction) and its contrast ratio. The minimum resolution of video-projectors must be 1024 x 768 pixels. In case multiple video-projectors are used, their installation is such that their projection borders overlap and create a large, unified projection.

For the wiring of video-projectors a 240V power supply cable and an armoured VGA cable with a length that corresponds to the room dimensions are required. If there is a false ceiling, cables run above it.

### D) Ceiling-suspended base for the video-projector

Video-projectors may be fixed on any commercially available ceiling-suspended base (4), as long as this base allows the vertical installation of the video-projector or a rotation of 90° in order to produce vertical projection (9) (10).

### E) Computer and peripheral devices

A central computer (6) which meets the following minimum specifications:
■ 2.5 GHz processor speed
■ RAM 512 Mb
■ 128 Mb graphics card
■ Windows XP operating system
■ Keyboard (wireless or USB)
■ Screen splitter (in case of multiple video-projectors)

### F) Interaction system with interactive pens

### F1) Wireless interactive pen coordinates' receiver

Wireless interactive pen coordinates' receiver (8). The receiver may be USB or Bluetooth. An example of a similar system is the E-Beam product series of Luidia. The receiver picks up the absolute spatial coordinates of the pens on the desktop (i.e. table) and changes them according to the digital projection's screen resolution. The receiver is fixed on one corner on top of the table.

### F2) One or more interactive pens

One or more wireless interactive pens (7) for direct interaction with the projected data. These pens operate with batteries (disposable or rechargeable) and are magnetic transmitters that send data of their absolute position to the receiver. According to this position, the computer's cursor is positioned.

Apart from the interactive pen system, alternative coordinates' systems may be used such as:
■ Mouse (wireless or not, with 2-dimensional or 3-dimensional coordinates)
■ Joystick (wireless or not, with 2-dimensional or 3-dimensional coordinates)
■ Hand gesture recognition or a light source system through digital video-camera. The camera may use infrared technology, or it may be a thermal or a standard camera. The camera system (which may be accompanied by special software) converts the spatial coordinates of the hands or of a light receiver (i.e. laser or lamp), or of a magnetic or thermal transmitter etc., into computer coordinates.
■ A touch sensitive screen which may be attached on the projection surface. The touch screen converts the coordinates of the point the user taps according to the digital projection's screen resolution. The touch screen is connected to the computer either with a USB cable or a wireless system (i.e. Bluetooth technology).

### G) Interaction method

The digital projection (9) (10) creates a work desktop on the table's surface (1) (2) that provides the necessary tools for the execution of various commands. Using the interactive pens (7) the users may execute a series of commands for the display, organization, editing and storage of digital files. These files may be of any format, as long as this is supported by the computer's operating system. Also, using the interactive pens any function supported by the operating system, such as for example internet browsing, e-mail sending etc. may be executed. For image and video files specifically, the system supports:
■ Selection and opening of folders from the computer's hard drive. Automatic positioning of the selected folder's contents in a specified area and in horizontal arrangement (16).
■ Selection and dynamic positioning of the selected folder's files (12) on the central area of the "virtual desktop". (11) The image files are represented by an icon displaying the corresponding image. The video files are represented by an icon displaying the first frame of the corresponding video. The selection and moving (15) of the files is realized by dragging and dropping the files on the desktop, which means that placing the interactive pen on a file the user moves it dynamically through space while the pen is being dragged on the "virtual desktop". When the user lifts the pen from the desktop, the selected file continues to move decelerating from the initial speed which depends on the pen's movement speed. If the file hits the border of the "virtual desktop", it bounces back (15) and starts to decelerate towards the opposite direction, until it stops.
■ A series of actions that can be executed by using the interactive pen (7) to tap designated areas on the files (12). Specifically, the users may manipulate the selected files as follows:
   o They can dynamically adjust the file icons size by tapping the pen on the designated area-button located on them, and by dragging them left (decrease size) or right (increase size) (13). Note that the resizing of file icons also affects any drawing or comment inserted in it with the drawing tools.
   o They can rotate the files towards various directions by tapping the pen on the designated area-button, located on them (14).
   o They can close the files by tapping the pen on the designated area-button, located on them.
   o They can move, "pass" to some else, or distribute the files to all parties present by dragging them with the pen (15).
   o They can revert the files to their original size and at the same time recover their initial position by tapping the pen on the designated area-button, located on them.
   o They can draw and write comments directly on the files, and save the edited files in digital format (34).
■ A main interactive control panel (25) which can be activated, moved and rotated to any direction according to the position of the user concerned. Through the main control panel the users may:
   o Simultaneously gather all selected files (12) to their original horizontal arrangement and recover their original size (26).
   o Simultaneously gather all selected files in horizontal arrangement so that each file covers part of its adjacent file (to save space) and recover their original size (27).
   o Simultaneously rotate all selected files to various directions (29).
   o Rearrange the display order of selected files (32).
   o Simultaneously move all selected files (12) to any area of the "virtual desktop" so that they are accessible from any side of the table (28). This moving is complemented by the organization of files in horizontal arrangement and recovery of their original size. The above method is one of the most important functions of the system as it allows all users to have access to files irrespectively to where they are seated.
   o Activate an automatic rotation mechanism of selected files (30). This mechanism automatically adjusts the orientation of the files, according to their position on the "virtual desktop". When for example a file approaches the right border of the "virtual desktop", it will rotate automatically so that the users seating on the right side may see the file properly. The above method is one of the most important functions of the system as it allows all users to see and actively participate irrespectively to where they are seated.
   o Simultaneously close all selected files (31).
   o Activate (33) a mechanism and an image editing control panel (34) which transforms the interactive pen into a multi-task drawing tool. Through this panel, the colour, the type, the width and other parameters of the interactive pen's trace, are selected (35) (36). The system has a mechanism that converts the interactive pen into a "virtual eraser" allowing the user to erase parts of his notes or drawings. In addition, the editing control panel allows the retrieval of previous commands as well as the immediate storage of the edited file in digital format (37).
■ A second interactive control panel (38) which can be activated, moved and rotated to any direction according to the position of the user concerned. Through the second control panel the users may:
   o Create and store (39) groups of selected files in the computer's hard drive. It is extremely important that during the storage no copies of the files are created in the computer, but a playlist with their paths (meaning their location in the hard drive). The above method offers a powerful advantage as it allows the creation of a large number of groups without congesting the hard drive with multiple copies of the same files.
   o Load and view stored file groups (40) (41). The groups loaded from the hard drive are saved in a list to which the users can have afterwards rapid access.
   o Write and save comments and description (42) (49) (50) for every file.
   o Create on-site and watch an automatic slide show (43) with adjustable transition speed, pause option, manual navigation option, etc.
   o Choose between a single or a double slide show. During the double slideshow (44), the "virtual desktop" (11) is split into two identical but with reverse orientation areas (45) (46) (like a mirror), which project the same image so that all parties may watch the presentation.
   o Export and directly save the presentation they created in exe format.
■ Multiple interactive drawing panels (17) that include a designated white area (18) on which users may write, draw or paint with their pen and then save their work (22) in digital format. Through each panel, the colour, type, and width (20) (21) of the interactive pen's trace, are selected. The system has a mechanism that converts the interactive pen into a "virtual eraser" (19) allowing the user to erase parts of his notes or drawings, as well as a mechanism for the retrieval of previous commands (22). Similarly to the previous panels, this panel can also be moved and rotated to any direction according to the position of the user concerned.
■ A series of designated symbols (23) dispersed in various areas of the "virtual desktop" (11). The aim of these symbols is to provide access to all the system's control panels (17) (25) (34) (38) from every side of the table. Specifically, using the interactive pen (7) to tap one of these symbols (23), a selection menu (24) appears on that specific area which provides access to all the system's control panels. The selected control panel, opens and appears on the area of the table from which the call took place . The above mentioned process is one of the most important functions of the system as it allows all users to have easy access to all its operations.

The present invention is an excellent communication and collaboration tool and may be useful in many sectors. We mention briefly some: promotion, communication, sales, advertising, entertainment, education, culture, research.

## Claims

1. **Interactive virtual desk** comprised by:
■ A table (1) or any other horizontal or inclined surface, or table on which an independent material of the same or smaller size is fitted (2) and used as a projection surface (9) (10).
■ Any type of chairs.
■ One or more video-projectors (3) which project downwards either vertically or from an angle.
■ A ceiling-suspended base (4) for one or more video-projectors (3) that can be turned downwards vertically or from an angle.
■ A computer (6), wireless keyboard and wireless mouse.
■ A coordinates' receiver (8) for wireless interactive USB or Bluetooth pens and one or more wireless interactive pens (7) for direct interaction with the projected data, or joysticks, or mice or interactive touch screen fitted on a surface, or a hand gesture recognition system or a light source recognition system.
■ Interaction methods with the computer's data.
**characterized by** its novel ability to support simultaneous use and interaction of multiple users for the presentation and management of computer data.

2. **Interactive virtual desk** according to claim 1, wherein the projection surface is a table (1) or some other horizontal or inclined surface which is white, smooth, non-reflective and damage-resistant or a projection surface made of an independent material (2) fitted on a horizontal or inclined surface which can be a white cardboard, a foam board, a milky white matt Plexiglas, a white matt silicon coat, PVC, a polycarbonate surface or any other material meeting above specifications.

3. **Interactive virtual desk** according to clams 1 and 2, comprising one video-projector (3) which projects on a horizontal or inclined surface (1) (2) and which is fixed on the ceiling (5) on a stable or rotating base (4), or multiple video-projectors (3) which project on a horizontal or inclined surface (1) (2) and which are fixed on the roof (5) on a stable or rotating base (4) so that their projection borders overlap and create a large, unified projection.

4. **Interactive virtual desk** according to claims 1, 2 and 3, comprising a coordinate's recognition system such as an interactive pen (7) and a coordinates' receiver (8), or hand recognition cameras or light source recognition cameras, or joysticks, or mice, or removable interactive touch screen.

5. **A method for operating the interactive virtual desk characterized in that** it supports the simultaneous interaction of multiple users for the display, organization, editing and storage of digital files and allows the display, spatial moving (15) (26) (27) (28), acceleration, deceleration, bouncing back (15), rotation (14) (29) (30), rearrangement (32), resizing (13) as well as direct drawing on digital files (12) such as images, drawings and videos and also possesses control panels (17) (25) (34) (38) which can be called and opened from and to any area of the desk by clicking on designated symbols (23) which are dispersed in various areas of the "virtual desktop" (11) and can be rotated either manually or automatically to all directions.

6. **A method for operating the interactive virtual desk** according to claim 5, **characterized in that** it supports the manual (14) (29) or automatic (30) rotation of files to all directions so that all users may see the files oriented towards them, and **in that** said rotation is executed gradually, passing through all intermediate angles, while in the case of automatic rotation files rotate on their own towards the correct direction, and **in that** it supports the dynamic resizing (13) of file icons with a simple tapping with the pen or finger, or light source, or mouse etc. (depending on the selected coordinates' receiver tool) on the designated area and then dragging left for size decrease or right for size increase, which also affects any drawing or comment added on these files.

7. **A method for operating the interactive virtual desk** according to claims 5 and 6, **characterized in that** it supports the dynamic moving and distribution (15) of files from one area of the "virtual desktop" to another, by using the pen (or other tools) to drag and drop them, where as the file is dropped it continues to move decelerating from the initial speed which depends on the movement speed of the pen (or other tools), and if the file hits on any border of the "virtual desktop" it bounces back and changes its direction (15) so that it always remains inside the borders.

8. **A method for operating the interactive virtual desk** according to claims 5, 6, and 7, **characterized in that** it supports the dynamic moving of all selected files in any area of the "virtual desktop" by simply clicking on the desired area (28) and **in that** it supports the simultaneous or individual recovery of size and position (26) of selected files and **in that** it supports the simultaneous recovery of size and position of selected files and their positioning in horizontal arrangement so that each file covers part of its adjacent file to save space (27), and **in that** it supports the simultaneous or individual closing (31) of all selected files and the dynamic rearrangement of the selected files display order which is executed by dragging and dropping the files in the desired order and then clicking a button (32) that stores the altered order.

9. **A method for operating the interactive virtual desk** according to claims 5, 6, 7 and 8, **characterized in that** it supports the direct drawing on image and video files (33) (34), or on one or multiple interactive drawing panels (17) - which rotate towards all directions - or on any area of the "virtual desktop" (11), and **in that** it supports the selection of colour, width and type (20) (21) (35) (36) of the trace left by the pen (or other tools) as it dragged on the desktop, and **in that** it converts the pen (or other tools) into a "virtual eraser" (19) providing the user the option to erase parts of his notes or drawings and **in that** it supports the storage (22) (37) of edited files in the computer's hard drive (6).

10. **A method for operating the interactive virtual desk** according to claims 5, 6, 7, 8, and 9 **characterized in that** it supports (38) the creation and storage of groups of selected files in a playlist format (39), which means that during the storage no copies of the files are created in the computer, only a playlist with their paths - meaning their location in the hard drive - and **in that** it supports the loading of saved groups (40) directly from the computer's hard drive and their listing and **in that** it supports the selection of a group from the list (41) and the automatic display of grouped files in slide show format (43) (44) with adjustable transition speed, pause option, manual navigation option, and **in that** it supports the addition and storage of comments (42) (49) (50) for each file, wherein said comments are attached to the file during the slide show presentation (44), and **in that** it supports the division of the "virtual desktop" into two identical but with reverse orientation areas (45) (46) (like a mirror) which project the same image so that all parties may watch the presentation, and **in that** it supports the exporting and saving of the presentation in exe format which can operate in any computer without the need for special software or technical equipment.

11. **Interactive virtual desk characterized in that** it is used for individual or team work, corporate or other presentations, design, advertising, administration and company management, education, training, entertainment, cultural activities, technological and scientific services, research.
